Europäisches Patentamt

European Patent Office

Office européen des brevets

(11) Veröffentlichungsnummer: **0 358 151**

**A2**

## EUROPÄISCHE PATENTANMELDUNG

(21) Anmeldenummer: 89116316.4

(22) Anmeldetag: 04.09.89

(51) Int. Cl.⁵ **A23J 1/20**

(30) Priorität: 06.09.88 DE 3830291

(43) Veröffentlichungstag der Anmeldung:
14.03.90 Patentblatt 90/11

(84) Benannte Vertragsstaaten:
**AT BE CH DE ES FR GB GR IT LI LU NL SE**

(71) Anmelder: **Roiner, Franz**
**Inselweg 7**
**D-3013 Barsinghausen(DE)**

(72) Erfinder: **Roiner, Franz**
**Inselweg 7**
**D-3013 Barsinghausen(DE)**

(74) Vertreter: **Zinnecker, Armin, Dipl.-Ing.**
**Rechtsanwälte Eduard Lorenz - Dipl.-Ing.**
**Hans-K. Gossel Dr. Ina Philipps - Dr. Paul B.**
**Schäuble Dr. Siegfried Jackermeier Dipl.-Ing.**
**Armin Zinnecker**
**Widenmayerstrasse 23 D-8000 München**
**22(DE)**

(54) Verfahren zur Gewinnung von Inhaltsstoffen aus Milch, Pflanzenmilch und ähnlichen Flüssigkeiten.

(57) Ein Verfahren dient zur Gewinnung von Inhaltsstoffen aus Milch, Pflanzenmilch und ähnlichen Flüssigkeiten und/oder aus Derivaten und/oder aus Rekombinaten derartiger Flüssigkeiten. Die Flüssigkeiten bestehen aus einem Lösungsmittel und Trockensubstanz in polydisperser Form. Um mit einem derartigen Verfahren Inhaltsstoffe in hochreiner Form mit definierten Eigenschaften auf wirtschaftliche Weise gewinnen zu können, wird der zu gewinnende Inhaltsstoff in seiner natürlichen biochemischen Verteilungs-und/oder Lösungsform im Lösungsmittel auf 45 bis unter 90 % in der vorhandenen Trockenmasse angereichert (erster Schritt). Anschließend wird mindestens ein sonstiger Inhaltsstoff gezielt anteilsmäßig (Anreicherung oder Verminderung) und/oder aktivitätsmäßig (Aktivierung oder Inaktivierung) derart verändert, daß dadurch die vorliegende natürliche biochemische Verteilungs-und/oder Lösungsform des zu gewinnenden Inhaltsstoffs in eine andere Verteilungs- und/oder Lösungsform umgewandelt wird (zweiter Schritt). Dann wird der Anteil des zu gewinnenden Inhaltsstoffes in der umgewandelten biochemischen Verteilungs-und/oder Lösungsform nach an sich bekannten Verfahren weiter erhöht (dritter Schritt).

# Verfahren zur Gewinnung von Inhaltsstoffen aus Milch, Pflanzenmilch und ähnlichen Flüssigkeiten

Die Erfindung betrifft ein Verfahren zur Gewinnung von Inhaltsstoffen aus Milch, Pflanzenmilch und ähnlichen Flüssigkeiten und/oder aus Derivaten und/oder Rekombinaten derartiger Flüssigkeiten, wobei die Flüssigkeiten aus einem Lösungsmittel und Trockensubstanz in polydisperser Form bestehen. Im Falle von Milch und Pflanzenmilch ist das Lösungsmittel Wasser.

Flüssigkeiten dieser Art und/oder deren Derivate wie beispielsweise Molke, Filtrate oder dergleichen und/oder deren Rekombinate sind gekennzeichnet durch variierende Inhaltsstoffanteile (Trockensubstanzanteile) und durch deren polydispersen Charakter.

Sie liegen teilweise als feindisperses, teilweise als kolloiddisperses, teilweise als molekulardisperses und teilweise als ionendisperses System vor. Die vornehmlich in Wasser verteilten Inhaltsstoffe, bestehend aus variierenden Anteilen an Fett, Phosphatiden, Sterinen, Glyceriden, fettlöslichen Vitaminen, freien Fettsäuren, Kaseinen, Albuminen, Globulinen, Enzymen, Kohlenhydraten, Kationen, Anionen, wasserlöslichen Vitaminen, Reststickstoffverbindungen, Gasen, Spurenelementen, Mikroorganismen und deren Enzymen, Neuraminsäure, Milchsäure und anderen Säuren, sowie Reaktionsprodukten, beeinflussen sich in ihrem Lösungsverhalten und den daraus resultierenden Eigenschaften gegenseitig.

Diese gegenseitige Beeinflussung und Eigenschaftsabhängigkeit ist aber nicht nur im originären Zustand gegeben, sondern auch dann, wenn einzelne Inhaltsstoffe insbesondere in hochreiner Form für unterschiedlichste weitere Verwendungszwecke gewonnen werden sollen.

Die Lebensmittel-Verfahrenstechnik versucht deshalb durch Anwendung einer Vielzahl von Trenn- und Isolationstechniken, die nebeneinander und/oder hintereinander geschaltet sind, zu möglichst reinen Formen zu kommen.

Neben Separier-, Demulgier-, Membrantrenn-, Wasserentzug-, Elektrodialyse-, Ionentauschverfahren in vielfältig kombinierter Form sind Verfahren bekannt, um mit Hilfe von Fällmittel, Bindemittel, Waschvorgängen, Enzymzusätzen, durch Beeinflussung von Mikrostrukturen einzelne Inhaltsstoffe zu gewinnen, wobei sogar in Kombination mit Trennverfahren Eigenschaftsveränderungen von Inhaltsstoffen in Flüssigkeiten vorgenommen werden..

So ist es aus der EP-A-0 056 658 bekannt, Eigenschaften von Mikrostrukturen mit Hilfe von Trennverfahren in polydispersen wässrigen Systemen zu verändern. Dabei ist aber nicht berücksichtigt, daß mindestens ein anderer Inhaltsstoff in erzeugten Konzentraten mitverändert werden muß (angereichert bzw. vermindert), um Verteilungsformen und Leistungszustand des zu gewinnenden Istzustandes zu ändern; außerdem ist nicht berücksichtigt, daß bei oder während der Hochkonzentrierung der Anteil der sonstigen Inhaltsstoffe in systematischer Reihenfolge minimiert wird, da nur dadurch gewünschte Eigenschaften erzielbar sind.

Aus der FR-A-2 10 3265 ist es bekannt, durch mehrfache Trennverfahren bzw. -behandlung von Magermilch eine Eiweißfraktion und eine Lactosefraktion zu bekommen, und durch Waschvorgänge dann zu reineren Fraktionen zu gelangen. Auch hier werden sonstige Inhaltsstoffe in ihrer Einflußnahme völlig unberücksichtigt gelassen.

Aus der DE-A-2 354 475 ist es bekannt, Ausgangsmilch einer Ultrafiltration, einem Waschvorgang und einer weiteren Manipulationsbehandlung zu unterwerfen, um Lactosegehalte in dieser Milch herabzusetzen.

Dabei ist weder an die Gewinnung eines oder mehrerer hochreiner Inhaltsstoffe gedacht noch ist die Bedeutung sonstiger Inhaltsstoffe für Gewinnung und Eigenschaften hochreiner Endprodukte berücksichtigt.

Aus der DE-A-4 443 540 ist es bekannt, auf kontinuierliche Weise Proteinhydrolysate - also aus einem einheitlichen Ausgangseiweiß unterschiedliche Eiweißarten durch Hydrolisierung im Ausgangsmedium und anschließender Trennung - zu gewinnen. Dabei wird von einer selektierten Proteinlösung in wässriger Lösung ausgegangen und der Umwandlungsprozeß durch Zusatz von Proteasen in der Ausgangslösung durchgeführt. Dabei ist in keinster Weise berücksichtigt, daß in biologischen polydispersen Flüssigkeiten die sonstigen Inhaltsstoffe diesen Prozeß erheblich stören, so daß in derartigen Flüssigkeiten dieser Prozeß gar nicht ablaufen kann.

Aus der DE-A-2 047 139 ist es bekannt, Lactose und Protein aus Labmolke mit Hilfe von Trennverfahren zu gewinnen. Dieses Verfahren hat den erheblichen Nachteil, daß, wie dargestellt, technisch wertvolles Protein mit einem Proteingehalt von 61,5 % -also kein hochreines Produkt mit definierten Eigenschaften - gewonnen werden kann.

Bei Lactosegewinnung nach diesem Verfahren werden zwar durch Waschvorgänge bzw. Elektrodialyse Salze entfernt, jedoch geschieht dies nicht in vorher konzentrierten Medien, so daß die Entfernung von Salzen nicht vollständig möglich ist; weiterhin werden sonstige weitere Inhaltsstoffe überhaupt nicht beachtet. Dies stört einen nachfolgenden Kristallisationsvorgang erheblich.

Aus der FR-A-2 288 473 ist ein Verfahren zum Behandeln eines Molkeserums insbesondere im Hinblick auf die Gewinnung von Glycoproteinen, Glycopeptiden und Sialsäure mit Hilfe der Ultrafiltration bekannt, wobei zunächst Molke ultrafiltert wird und wobei ein Ultrafiltrat, das vor allem Lactose, Salze und Glycopeptide enthält, und ein Retentat, das hauptsächlich Eiweiß und unter anderem Sialsäure enthält, gewonnen wird. Danach wird durch Fällung von Eiweiß und Abtrennung durch Separation eine weitere Flüssigkeit gewonnen, die durch verschiedene Zusätze sowie verschiedene Verfahren weiterbehandelt wird. Dieses Verfahren hat den Nachteil, daß der zu gewinnende Inhaltsstoff -der ausschließlich aus dem anfallenden Serum gewonnen wird -nicht in einen optimalen Konzentrationsbereich gebracht wird. Außerdem wird dabei auch nicht mindestens ein Inhaltsstoff gezielt verändert, so daß eine Vielzahl weiterer Manipulationen vorgenommen werden muß, da die störenden bzw. fördernden Einflüsse der sonstigen Inhalts- bzw. Zusatzstoffe unbeachtet bleiben.

Aus der EP-A-0 249 368 ist ein Verfahren bekannt, Lactose aus einer lactosehaltigen Flüssigkeit, die Calcium und Asche enthält, zu gewinnen. Als lactosehaltige Flüssigkeit wird Molke genannt. Molke enthält jedoch neben Lactose, Calcium und Asche erhebliche Anteile anderer Inhaltsstoffe wie Caseine, Molkenproteine, Enzyme, Zusatzstoffe wie Säure, Mikroorganismen und sonstige Mineralsalze usw. Derartige Flüssigkeiten sind aber praktikabel nicht zu behandeln mit Aktivkohle, Elektrodialyse, Ionentausch usw. Ein weiterer erheblicher Nachteil im Falle einer in EP-A-0 249 368 genannten theoretischen Flüssigkeit ist der willkürliche Lactosegehalt, der lediglich mit reichhaltig bezeichnet ist. Daraus kann wirtschaftlich kein hochreines Produkt gewonnen werden.

Aus der FR-A-2 487 642 ist ein Verfahren zur Aufbereitung von Eiweißfraktionen für den technischen Gebrauch mit Hilfe von chromatographischen und Ionentauschverfahren bekannt, wobei zunächst das Ausgangsmaterial einem Membranfilterverfahren unterzogen wird und dabei eine enzymatische Proteolyse mit Hilfe von Enzymen, chemischen oder thermischen Manipulationen vorgenommen wird, um Eiweißfraktionen von weniger als ungefähr 15000 Molekulargewicht zu erhalten. Dabei wird wiederum nicht berücksichtigt, daß die Nichtbeachtung der sonstigen Inhaltsstoffe die Erreichung gewünschter Eigenschaften sowie die Herstellung hochreiner Produkte, um diese Produkte in pharmazeutischen, kosmetischen Bereichen zsw. einsetzen zu können, nicht zuläßt.

All diesen Verfahren gemeinsam ist der Nachteil, daß selbst die Kombination der unterschiedlichsten Trennverfahren in Verbindung mit Zusatzstoffen und mehrfachen Trennbehandlungen einzelner Trennphasen entweder zu keinem reinen Produkt führt bzw. bei Herstellung hochreiner Endprodukte wirtschaftlich zu aufwendig ist.

Als weiterer gravierender Nachteil muß hingenommen werden, daß einige oder alle Eigenschaften des so hergestellten Endprodukts willkürlich nicht vorherbestimmbar sind, weil die sonstigen Inhaltsstoffe, die von den angewendeten Verfahren ungezielt mitbehandelt und nicht in präziser Form systematisch entfernt oder angereichert werden, Eigenschaften des Endprodukts dominant beeinflussen.

Bei Zusatz von Fällungsmittel, Kristallisationsmittel und der gleichen oder bei Umwandlungsprozessen, die in der Ausgangsflüssigkeit verwendet werden bzw. stattfinden, ist immer von Nachteil, daß sowohl die Zusatzstoffe als auch die Reaktionsprodukte entweder aufwendig entfernt werden müssen bzw. Eigenschaften mitbeeinflussen.

Aufgabe der Erfindung ist es, ein Verfahren der eingangs angegebenen Art vorzuschlagen, mit dem die oben beschriebenen Nachteile behoben werden können und mit dem Inhaltsstoffe in hochreiner Form mit definierten Eigenschaften auf wirtschaftliche Weise gewonnen werden können.

Erfindungsgemäß wird diese Aufgabe durch die im Anspruch 1 angegebenen Merkmale gelöst. Zunächst wird in einem ersten Schritt der zu gewinnende Inhaltsstoff in seiner natürlichen biochemischen Verteilungs- und/oder Lösungsform im Lösungsmittel auf 45 bis unter 90 % in der vorhandenen Trockenmasse angereichert. Anschließend wird in einem zweiten Schritt mindestens ein sonstiger Inhaltsstoff gezielt anteilsmäßig (durch Anreicherung oder Verminderung) und/oder aktivitätsmäßig (durch Aktivierung oder Inaktivierung) derart verändert, daß dadurch die vorliegende natürliche biochemische Verteilungs- und/oder Lösungsform des zu gewinnenden Inhaltsstoffs in eine andere biochemische Verteilungs- und/oder Lösungsform umgewandelt wird. Dann wird in einem dritten Schritt der Anteil des zu gewinnenden Inhaltsstoffs in der umgewandelten biochemischen Verteilungs- und/oder Lösungsform nach an sich bekannten Verfahren weiter erhöht.

Der zu gewinnende Inhaltsstoff liegt in der Flüssigkeit zunächst in seiner natürlichen biochemischen Verteilungs- und/oder Lösungsform vor. Unter der natürlichen biochemischen Verteilungs- und/oder Lösungsform versteht man beispielsweise die Mycellform, die Submycellform, die Teilchengröße, das Molekulargewicht oder ähnliches. Diese natürliche biochemische Verteilungs- und/oder Lösungsform bleibt während der Aufkonzentrierung im ersten Schritt unverändert. Während dem ersten Schritt ist auch das Lösungsmittel nach wie vor vorhanden. Im Gegensatz zu vorbekannten Verfahren wird also das Lösungsmittel nicht entfernt, sondern beibehalten. Bei Bedarf kann die Menge des Lösungsmittels reduziert werden. Das Lösungsmittel muß jedoch während des ersten und zweiten Schritts in einer ausreichenden Menge vorhanden sein.

Vorteilhafte Weiterbildungen des erfindungsgemäßen Verfahrens sind in den Unteransprüchen beschrieben.

Unter aktivitätsmäßiger Veränderung gegenüber dem zu gewinnenden Inhaltsstoff versteht man beispielsweise die Veränderung von inaktiv vorliegenden Enzymen durch deren Einbau in Komplexe oder deren Umwandung in Provitaminformen.

Unter Aktivitätsänderung mindestens eines sonstigen Inhaltsstoffes in Bezug auf den zu gewinnenden Inhaltsstoff ist auch die Beeinflussung des Dissoziationsverhaltens von Säuren zu verstehen, da entsprechende Gleichgewichtslagen von Säuren die natürliche Verteilungs- bzw. Lösungsform des zu gewinnenden Stoffes in Mitleidenschaft ziehen.

Eine Aktivitätsänderung mindestens eines sonstigen Inhaltsstoffes kann auch die Beeinflussung von Gleichgewichtslagen gelöster oder komplexer gelöster Salze sein, da eine derartige Einflußnahme ebenfalls dazu führt, die natürliche Verteilungs- und/oder Lösungsform des zu gewinnenden Inhaltsstoffes zu verändern.

Selbstverständlich kann erfindungsgemäß auch eine Aktivitätsänderung mehrerer sonstiger Inhaltsstoffe in Kombination vorgenommen werden, da dann die Auswirkung auf Veränderungen des zu gewinnenden Inhaltsstoffes kumulativ wirken bei Minimierung des Anteils der aktivitätsmäßig wirkenden sonstigen Inhaltsstoffe.

Vorzugsweise wird der Anteil des zu gewinnenden Inhaltsstoffs in der umgewandelten Verteilungs- und/oder Lösungsform im dritten Schritt auf mindestens 90 bis 95 % in der vorhandenen Trockenmasse erhöht und werden dabei die Anteile der sonstigen Inhaltsstoffe in systematischer Reihenfolge minimiert und/oder als Komplex eingebaut und/oder entfernt. Vorzugsweise wird sodann in einem vierten Schritt der Anteil des zu gewinnenden Inhaltsstoffes in der umgewandelten Verteilungs- und/oder Lösungsform und/oder in reiner und/oder in komplexer Form auf über 95 bis 100 % in der vorhandenen Trockenmasse erhöht.

Die Anreicherung des zu gewinnenden Inhaltsstoffs in seiner natürlichen Verteilungs- und/oder Lösungsform im ersten Schritt kann durch an sich bekannte Verfahren erfolgen, also mit Hilfe von Trennbehandlungen und/oder Lösungsmittelentzugsverfahren und/oder Zusatz derartiger Stoffe.

Vorzugsweise wird als letzter Schritt das Lösungsmittel entfernt.

Eine besonders vorteilhafte Weiterbildung des erfindungsgemäßen Verfahrens ist dadurch gekennzeichnet, daß während der Anreicherung des zu gewinnenden Inhaltsstoffs in seiner natürlichen biochemischen Verteilungs- und/oder Lösungsform im ersten Schritt ein weiterer Inhaltsstoff gezielt anteilsmäßig und/oder aktivitätsmäßig verändert wird, wobei dieser weitere Inhaltsstoff geeignet ist, die natürliche biochemische Verteilungs- und/oder Lösungsform des zu gewinnenden Inhaltsstoffs in eine andere biochemische Verteilungs- und/oder Lösungsform umzuwandeln. Es wird also im ersten Schritt ein derartiger weiterer Inhaltsstoff gezielt anteilsmäßig und/oder aktivitätsmäßig verändert, der im zweiten Schritt die natürliche biochemische Verteilungs- und/oder Lösungsform des zu gewinnenden Inhaltsstoffs in eine andere biochemische Verteilungs- und/oder Lösungsform umzuwandeln in der Lage ist. Der besondere Vorteil dieser Weiterbildung liegt darin, daß während des ersten Schritts der zweite Schritt bereits vorbereitet wird.

Ganz besonders vorteilhaft ist es, wenn der soeben beschriebene weitere Inhaltsstoff derselbe ist wie derjenige Inhaltsstoff, der im zweiten Schritt gezielt anteilsmäßig und/oder aktivitätsmäßig verändert wird. In diesem Fall wird im ersten Schritt bereits derjenige weitere Inhaltsstoff gezielt anteilsmäßig und/oder aktivitätsmäßig verändert, der im zweiten Schritt die Umwandlung des zu gewinnenden Inhaltsstoffs in eine andere biochemische Verteilungs- und/oder Lösungsform bewirkt. Hierdurch kann das erfindungsgemäße Verfahren besonders einfach, wirkungsvoll und kostengünstig durchgeführt werden.

Nach einer weiteren vorteilhaften Weiterbildung des Verfahrens wird während der Umwandlung des zu gewinnenden Inhaltsstoffs gemäß dem zweiten Schritt gleichzeitig die Anreicherung des zu gewinnenden Inhaltsstoffs nach dem ersten Schritt durchgeführt. Hierdurch kann trotz der Umwandlung des zu gewinnenden Inhaltsstoffs in eine andere biochemische Verteilungs- und/oder Lösungsform die Konzentration dieses zu gewinnenden Inhaltsstoffs in seiner natürlichen biochemischen Verteilungs- und/oder Lösungsform aufrechterhalten oder bei Bedarf auch noch gesteigert werden.

Vorteilhaft ist es, wenn die gezielte Veränderung des sonstigen Inhaltsstoffs im zweiten Schritt durch Ansammlung und/oder Aktivitätsänderung im Lösungsmittel erfolgt.

Eine weitere vorteilhafte Weiterbildung ist dadurch gekennzeichnet, daß das erfindungsgemäße Verfahren wiederholt durchgeführt wird und daß dabei mindestens ein weiterer Inhaltsstoff, vorzugsweise Enzyme, Lecithine, Bindemittel, natürliche Konservierungsstoffe oder ähnliches aufkonzentriert werden. Diese weiteren Inhaltsstoffe liegen normalerweise als Minorbestandteile vor, so daß ‚sie nicht auf wirtschaftliche Weise gewonnen werden können. Wenn das erfindungsgemäße Verfahren jedoch mehrmals durchgeführt wird, können die genannten weiteren Inhaltsstoffe auf einfache Weise aufkonzentriert werden. Sie liegen dann in einer Konzentration vor, die es ermöglicht, den entsprechenden Inhaltsstoff wirtschaftlich sinnvoll zu gewinnen.

Das erfindungsgemäße Verfahren kann sowohl im Batchverfahren (Chargenverfahren) als auch in einem kontinuierlichen Verfahren durchgeführt werden. Insbesondere wird durch das erfindungsgemäße Verfahren die Möglichkeit geschaffen, es in einem vorteilhaften kontinuierlichen Verfahren durchführen zu können.

Das erfindungsgemäße Verfahren berücksichtigt die Tatsache, daß sich die Inhaltsstoffe der Flüssigkeiten in ihrem Lösungsverhalten und in den daraus resultierenden Eigenschaften gegenseitig beeinflussen und daß diese gegenseitige Beeinflussung und Eigenschaftsabhängigkeit nicht nur im originären Zustand gegeben ist, sondern auch dann, wenn einzelne Inhaltsstoffe insbesondere in hochreiner Form gewonnen werden sollen. Demzufolge werden während der Aufkonzentrierung des zu gewinnenden Stoffes die Anteile der sonstigen Inhaltsstoffe in systematischer Reihenfolge minimiert und/oder als Komplex eingebaut oder entfernt.

Das erfindungsgemäße Verfahren wird nachfolgend anhand einiger Beispiele erläutert.

(1) Gewinnung von hochreinem Casein aus Milch

Milch wird zunächst, nach molkereiüblicher Vorbehandlung, einem Eiweißkonzentrationsverfahren - das kann ein Membranfilterverfahren oder ein sonstiges kombiniertes Konzentrationsverfahren sein - unterzogen, bis das Casein in seiner uneinheitlichen kolloiddispersen Form einen Anteil in der vorhandenen Trockenmasse von annähernd 60 % erreicht hat. Das Lösungsmittel (Wasser) wird während dieses ersten Schritts nicht verändert, bleibt also nach wie vor vorhanden.

Sobald das Casein einen Anteil in der vorhandenen Trockenmasse von 45° erreicht hat, erfolgt zusätzlich eine Anreicherung vorhandener mehrwertiger Kationen unter mäßigem Entzug von Anionen. Der uneinheitliche kolloiddisperse Zustand des originären Caseins wandelt sich dabei in eine Suspension um. In diesem zweiten Schritt wird also die natürliche biochemische Verteilungs- und/oder Lösungsform des Caseins in eine andere biochemische Verteilungs- und/oder Lösungsform umgewandelt.

Mit Hilfe weiterer bekannter Trennverfahren, z.B. Separation und/oder Membrantrennverfahren, wird sodann der Caseinanteil in der vorhandenen Trockenmasse von 60 % auf mindestens 90 % angehoben.

Während dieses Konzentrationsprozesses werden zunächst Sulfationen und Phosphationen, sodann Clorid und Kaliumionen entfernt und durch Kationen ersetzt, die sich in den Caseinkomplex einbauen, sodann werden in Lösung befindliche Serumproteine, Enzyme und Mikroorganismen und anschließend Lactose vom Casein abgetrennt.

Das bereits sehr rein vorliegende Caseinatkomplex wird sodann mit Hilfe weiterer Membrantrennverfahren und Trocknungsverfahren auf ungefähr 98 % in der Trockenmasse erhöht.

In einem speziellen Verfahren kann vor endgültiger Trocknung das als Suspension vorliegende Casein in hochreinem Wasser bzw. hochreinem/saurem Wasser gewaschen werden.

In diesem Falle sind Reinheiten bis nahe 100 % Anteil in der Trockenmasse erreichbar.

(2) Gewinnung hochreiner Serumproteine aus Molke

Süß- und/oder Sauermolke wird zunächst einem Konzentrationsverfahren bekannter Art unterzogen, und zwar solange, bis der Anteil vorhandener Serumproteine in der ursprünglichen Verteilungsform auf ca. 85% in der Trockenmasse angestiegen ist. Während dieses Konzentrationsverfahrens (erster Schritt) bleibt die natürliche biochemische Verteilungsform der Serumproteine erhalten. Das Lösungsmittel (Wasser) wird nicht entfernt, sondern ist während dieses ersten Schritts vorhanden. Im Verlauf dieses Konzentrationsprozesses wird der Anteil vorhandener Säuren erhöht und gleichzeitig der Wassergehalt weiter vermindert. Es wird also ein weiterer Inhaltsstoff (Säuren) gezielt anteilsmäßig verändert, wobei dieser weitere Inhaltsstoff (Säuren) geeignet ist, die natürliche biochemische Verteilungsform des zu gewinnenden Inhaltsstoffs (Serumproteine) in eine andere biochemische Verteilungsform umzuwandeln. Der weitere Inhaltsstoff (Säuren) ist derselbe wie derjenige Inhaltsstoff, der im zweiten Schritt gezielt anteilsmäßig verändert wird.

Die Konzentration der Serumproteine und die gleichzeitige Erhöhung des Anteils vorhandener Säuren bewirkt den Übergang (zweiter Schritt) der molekulardispersen Form der Serumproteine in eine kolloiddisperse Form. In einem speziellen Falle kann man dabei die Temperatur auf 85 bis 98° C erhöhen, so daß die kolloiddisperse Form in eine Suspension umgewandelt wird.

Mit Hilfe weiterer bekannter Trennverfahren, z.B. Membrantrennverfahren, werden sodann Salze, dann Lactose und die sonstigen Inhaltsstoffe weiter minimiert. In einem anschließenden Trocknungsprozeß wird der Anteil der Serumproteine auf 98 - 100% in Trockenmasse erhöht. Unterbleibt die Behandlung mit hohen Temperaturen, dann erhält man Serumproteine mit natürlichen Strukturen in hochreiner Form.

Selbstverständlich können auf diese Weise alle anderen Inhaltsstoffe aus Flüssigkeiten mit variierenden Inhaltsstoffen in polydisperser Form in hochreiner Form mit definierbaren Eigenschaften gewonnen werden.

In einer weiteren Ausgestaltung der Erfindung können der Ausgangsflüssigkeit natürlich durch Rekombination Stoffe, die anschließend in hochreiner Form gewonnen werden sollen, aber in unreiner Form vorliegen, zugesetzt werden, um anschließend erfindungsgemäß behandelt zu werden.

(3) Gewinnung hochreiner Lactose aus Permeat

Permeat mit beispielsweise einer Trockenmasse von 4,75 % Lactose, 1 % Mineralbestandteile, 0,05 % Eiweiß und 0,2 % Milchsäure wird zunächst einem Konzentrationsverfahren bekannter Art unterzogen, und zwar solange, bis der Anteil vorhandener Lactose von zunächst ca. 79 % in der vorhandenen Trockenmasse auf 89,5 % ansteigt. Die molekulare Lösungsform des Disaccharids bleibt dabei erhalten. Mineralbestandteile werden reduziert. Das Lösungsmittel Wasser bleibt soweit vorhanden, daß die ursprüngliche Lösungsform sich nicht ändert (erster Schritt).

Der Prozeß wird über Leitfähigkeitsmessung und pH- und Temperaturmessung überwacht.

Im zweiten Schritt wird der Säureanteil des Systems gezielt erhöht, so daß Mineralstoffe in Lösung bleiben, Lactose jedoch die ursprüngliche molekulare Lösungsform nicht mehr beibehalten kann und auskristallisiert. In einem kontinuierlichen Ablaufprozeß, der über Leitfähigkeitsmessung, pH- und Temperaturmessung (in einer besonderen Ausgestaltung kann dabei die Temperatur abgesenkt werden, damit das Dissoziationsverhalten des Wassers noch weiter eingeengt wird) gesteuert wird, werden Lactosekristalle durch an sich bekannte Verfahren (beispielsweise Separation) aus dem System entfernt, wobei im verbleibenden System Lactose auf dem Konzentrationslevel 89,5 % durch fortlaufende Konzentration und gleichzeitige systematische Entfernung der gelösten Mineral- und Eiweißbestandteile gehalten wird.

In einer besonderen Ausgestaltung des Verfahrens werden anstatt Säure als sonstiger Inhaltsstoff Lactose spaltende Enzyme angereichert und/oder aktiviert. Der Säurepegel wird dabei so gesteuert, daß die angesammelten und/oder aktivierten Enzyme zum einen im optimalen Substrat (Lactosegehalt in der vorhandenen Trockenmasse) und zum anderen im optimalen pH-Wert (für Lactosespaltung) biochemisch tätig werden können. Diese Ausgestaltung bzw. Verfahrensführung erlaubt die Gewinnung hochreiner gespaltener Lactose.

Die jeweilig jetzt vorliegende andere biochemische Verteilungs-und/oder Lösungsform wird nunmehr weiter erhöht. Hierin liegt ein besonderer Vorteil der Erfindung, da mit einfachen bekannten Konzentrationsmaßnahmen Reinheiten bis 100 % erreicht werden können.

(4) Aufkonzentrierung und Gewinnung eines weiteren Inhaltsstoffes

Ein besonders vorteilhaftes Verfahren liegt darin, daß durch die notwendige Veränderung mindestens eines sonstigen Inhaltsstoffes zwei oder mehrere Inhaltsstoffe aus den zu behandelnden Flüssigkeiten in hochreiner Form gewonnen werden können.

Der Anteil an lactosespaltenden Enzymen in Molke, Milch oder Permeat ist relativ gering, so daß eine wirtschaftliche Gewinnung schwierig ist. Durch Anreicherung und/oder Aktivierung bei Gewinnung von beispielsweise gespaltenem Milchzucker oder auch von Caseinaten werden derartige Enzyme zunächst bis zu einem Stand erhöht, der in der Lage ist, den zunächst zu gewinnenden Inhaltsstoff biochemisch zu verändern. Ist Lactose aus dem System entfernt, wird das Restsystem erneut verwendet. Dabei erfolgt eine weitere Aufkonzentrierung und/oder Aktivitätsänderung der Enzyme. Der Anteil der Enzyme steigt stetig, so daß, bei einem bestimmten Enzymlevel, diese wirtschaftlich aus dem System abgetrennt werden können. Dabei wird wieder nach den angegebenen Verfahrensschritten vorgegangen.

Der zu gewinnende Inhaltsstoff besteht nunmehr beispielsweis aus Enzymen, die in der Trockenmasse auf unter 90 % erhöht werden. Es können natürlich auch andere Inhaltsstoffe wie Lecithine, Cholesterine, Fettsäuren, Konservieerungsstoffe, Bindemittel usw. sein.

Im zweiten Schritt wird beispielsweise der sonstige Inhaltsstoff Säure (Mineralstoffe) vermindert und der sonstige Inhaltsstoff Eiweiß erhöht. Dies bewirkt eine biochemische Veränderung des zu gewinnenden Inhaltsstoffes. Enzyme werden beispielsweise inaktiviert. Diese Enzyme werden dann in hoher Reinheit durch bekannte Verfahren gewonnen.

Diese Gewinnung von Enzymen ist wesentlich einfacher und effektiver als die Gewinnung von Enzymen nach dem Stand der Technik mit Hilfe von Bioreaktoren.

In einer besonderen Ausgestaltung des Verfahrens können Mikroorganismen zunächst in der Trockenmasse angereichert werden, so daß diese vermehrt zu Enzymbildung (Aromabildung), also zu intensiver Stoffwechseltätigkeit, veranlaßt werden. Im zweiten Schritt wird beispielsweise Eiweiß angereichert, so daß Enzyme in das Eiweiß eingebaut und inaktiviert werden. Dieser Komplex kann dann im dritten Schritt in hochreiner Form gewonnen werden.

## Ansprüche

1. Verfahren zur Gewinnung von Inhaltsstoffen aus Milch, Pflanzenmilch und ähnlichen Flussigkeiten und/oder aus Derivaten und/oder Rekombinaten derartiger Flüssigkeiten, wobei die Flüssigkeiten aus einem Lösungsmittel und Trockensubstanz in polydisperser Form bestehen,
**dadurch gekennzeichnet,**
daß der zu gewinnende Inhaltsstoff in seiner natürlichen biochemischen Verteilungs- und/oder Lösungsform im Lösungsmittel auf 45 bis unter 90 % in der vorhandenen Trockenmasse angereichert wird (erster Schritt),
daß anschließend mindestens ein sonstiger Inhaltsstoff gezielt anteilsmäßig (Anreicherung oder Verminderung) und/oder aktivitätsmäßig (Aktivierung oder Inaktivierung) derart verändert wird, daß dadurch die vorliegende natürliche biochemische Verteilungs- und/oder Lösungsform des zu gewinnenden Inhaltsstoffs in eine andere biochemische Verteilungs- und/oder Lösungsform umgewandelt wird (zweiter Schritt),
und daß dann der Anteil des zu gewinnenden Inhaltsstoffs in der umgewandelten biochemischen Verteilungs- und/oder Lösungsform nach an sich bekannten Verfahren weiter erhöht wird (dritter Schritt).

2. Verfahren nach Anspruch 1, dadurch gekennzeichnet, daß die aktivitätsmäßige Veränderung des sonstigen Inhaltsstoffs erfolgt durch Veränderung von inaktiv vorliegenden Enzymen in aktive Formen durch deren Freisetzung aus komplexen Verbindungen und/oder durch die Inaktivierung von Enzymen durch deren Einbau in Komplexe oder deren Umwandlung in Provitaminformen und/oder durch die Beeinflussung des Dissoziationsverhaltens von Säuren und/oder durch die Beeinflussung von Gleichgewichtslagen gelöster oder komplexer gelöster Salze.

3. Verfahren nach Anspruch 1 oder 2, dadurch gekennzeichnet, daß der Anteil des zu gewinnenden Inhaltsstoffs in der umgewandelten biochemischen Verteilungs- und/oder Lösungsform im dritten Schritt auf mindestens 90 bis 95 % in der vorhandenen Trockenmasse erhöht wird und dabei die Anteile der sonstigen Inhaltsstoffe in systematischer Reihenfolge minimiert und/oder als Komplex eingebaut und/oder entfernt werden und daß vorzugsweise sodann der Anteil des zu gewinnenden Inhaltsstoffs in reiner und/oder komplexer Form auf über 95 bis 100 % in der Trockenmasse erhöht wird und daß vorzugsweise anschließend das Lösungsmittel entfernt wird.

4. Verfahren nach einem der vorhergehenden Ansprüche, dadurch gekennzeichnet, daß während der Anreicherung des zu gewinnenden Inhaltsstoffs in seiner natürlichen biochemischen Verteilungs- und/oder Lösungsform ein weiterer Inhaltsstoff, der geeignet ist, die natürliche biochemische Verteilungs- und/oder Lösungsform des zu gewinnenden Inhaltsstoffs in eine andere Verteilungs- und/oder Lösungsform umzuwandeln, gezielt anteilsmäßig (Anreicherung oder Verminderung) und/oder aktivitätsmäßig (Aktivierung oder Inaktivierung) ver ändert wird.

5. Verfahren nach Anspruch 4, dadurch gekennzeichnet, daß der weitere Inhaltsstoff derselbe ist wie derjenige Inhaltsstoff, der im zweiten Schritt gezielt anteilsmäßig oder aktivitätsmäßig verändert wird.

6. Verfahren nach einem der vorhergehenden Ansprüche, dadurch gekennzeichnet, daß während der Umwandlung gemäß dem zweiten Schritt gleichzeitig die Anreicherung nach dem ersten Schritt durchgeführt wird.

7. Verfahren nach einem der vorhergehenden Ansprüche, dadurch gekennzeichnet, daß die gezielte Veränderung des sonstigen Inhaltsstoffs durch Ansammlung und/oder Aktivitätsänderung im Lösungsmittel erfolgt.

8. Verfahren nach einem der vorhergehenden Ansprüche, dadurch gekennzeichnet, daß dieses Verfahren wiederholt durchgeführt wird und daß dabei mindestens ein weiterer Inhaltsstoff, vorzugsweise Enzyme, Lecithine, Bindemittel, natürliche Konservierungsstoffe oder ähnliches aufkonzentriert werden.